# EUROPÄISCHE PATENTSCHRIFT

(11) **EP 1 001 078 B1**
(45) Veröffentlichungstag und Bekanntmachung des Hinweises auf die Patenterteilung: **31.03.2004**
(21) Anmeldenummer: 99120435.5
(22) Anmeldetag: 14.10.1999
(51) Int. Cl.: D21F 1/70, B03D 1/14

(54) **Verfahren und Vorrichtung zur Entfernung von Partikeln aus einer wässrigen papierfaserhaltigen Suspension**
Method and device for removing particles from aqueous paper fibre suspension
Méthode et dispositif pour la séparation des particules d'une suspension aqueuse de fibres à papier

(30) Priorität: 13.11.1998 DE 19852548
(43) Veröffentlichungstag der Anmeldung: 17.05.2000
(73) Patentinhaber: Voith Paper Patent GmbH, 89522 Heidenheim (DE)
(72) Erfinder: Mannes, Wolfgang, 88213 Bavendorf (DE)

(56) Entgegenhaltungen:
- DE-A- 2 552 228
- US-A- 4 749 473

## Beschreibung

Die Erfindung betrifft ein Verfahren gemäß dem Oberbegriff des Anspruchs 1 sowie eine Vorrichtung gemäß dem Oberbegriff des Anspruchs 14.

Verfahren und Vorrichtungen der genannten Art werden verwendet, um aus einer papierfaserhaltigen Suspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Papier-Faserstoffsuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die angesprochenen Feststoffteilchen hydrophob sind und deshalb zusammen mit den Luftblasen in den Schaum gelangen.

Neben den Druckfarbenpartikeln gibt es auch eine Vielzahl weiterer Stoffe, die hydrophob sind, und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Aus der US 4,749,473 ist ein Flotationsverfahren bekannt, bei dem die Suspension in einem stehenden zylindrischen Flotationsbehälter, der mit senkrechten Trennwänden versehen ist, flotiert wird. Die Suspension wird in nacheinanderfolgenden Ab- und Aufwärtsströmungen von einer zur anderen Seite des Behälters geführt, wobei ständig Luftblasen in die darüberliegende Schaumschicht aufsteigen. Die Belüftung erfolgt im Bodenbereich durch mit Düsen versehene horizontale Zylinder, welche vorzugsweise in Rotation versetzt werden.

Es ist Aufgabe der Erfindung, ein neues Verfahren bzw. eine dafür geeignete kompakte Vorrichtung zu schaffen, mit denen es gelingt, die Störstoffpartikel zuverlässig und effektiv zu entfernen und die einen geringen apparativen Aufwand erfordern.

Diese Aufgabe wird durch die in den Kennzeichen der Ansprüche 1 oder 14 genannten Merkmale gelöst.

Mit Hilfe der Erfindung wird das innerhalb des Flotationsbehälters liegende Volumen optimal für die Flotation ausgenutzt. Durch die zwischen den Trennwänden gebildeten Kanäle kann die mit Gasblasen (in der Regel Luftblasen) vermischte Suspension einen relativ langen Strömungsweg zurücklegen, bis eine Abtrennung des Flotationsschaumes erfolgt. Die eingesetzten Gasblasen stehen zur Koppelung mit den Partikeln also lange zur Verfügung, da sie erst spät von der Suspension getrennt werden. Dadurch gehen weniger Gasblasen, die ohne angelagerte Partikel in den Schaum gelangen, verloren. Insgesamt ist die Wahrscheinlichkeit, daß die in ihr enthaltenen Störstoffe mit den Gasblasen in Kontakt treten und dadurch flotiert werden können, sehr hoch. Eine Nachbelüftung der Suspension im Flotationsbehälter ist im allgemeinen nicht erforderlich. In den Fällen, in denen der Aufwand einer Nachbelüftung dennoch sinnvoll ist, kann die Größe der Luftblasen in den einzelnen Kanälen mit Vorteil variiert werden. Die Bildung von relativ engen Kanälen (im Gegensatz zum Flotationsbehälter ohne entsprechende Trennwände) bringt zudem den Vorteil, daß die Strömung gut geführt und damit definiert ist. Die für die Durchführung eines Flotationsverfahrens wichtigen Parameter können so optimal eingestellt werden.

Die Erfindung und ihre Vorteile werden erläutert anhand von Figuren. Dabei zeigen:
- Fig. 1: schematisch: Die Durchführung des erfindungsgemäßen Verfahrens mit einer dazu geeigneten Flotationsvorrichtung;
- Fig. 2 bis 5: jeweils eine Variante des Verfahrens mit geänderter Strömungsführung.

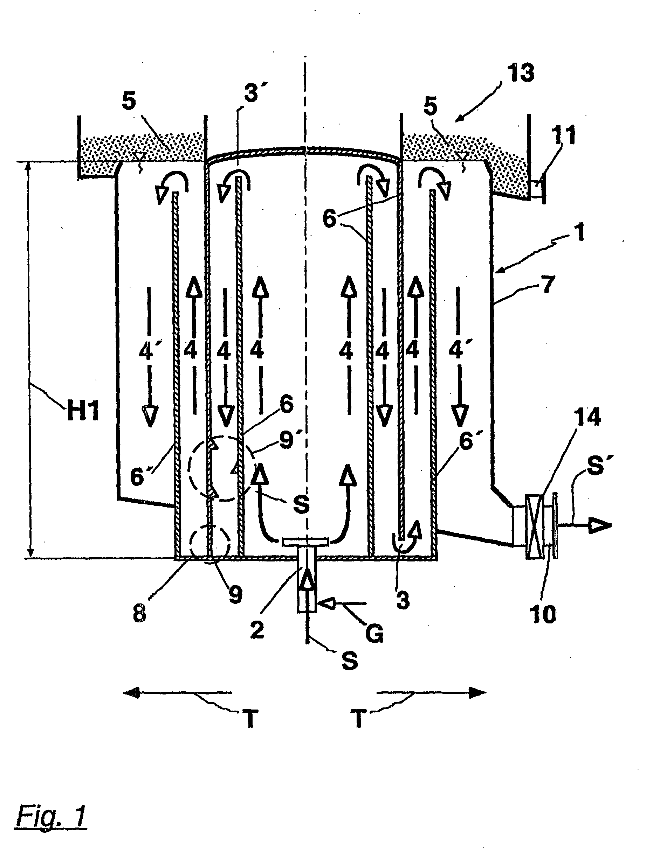

In Fig. 1 ist ganz schematisch eine Flotationsvorrichtung dargestellt, mit der das erfindungsgemäße Verfahren ausgeführt werden kann. Demnach wird die Suspension S zusammen mit Gas G durch den Einlauf 2 in den Flotationsbehälter 1 eingegeben. Die Zugabe erfolgt hier mittig von unten, es sind aber auch andere Stellen möglich. Die Hauptströmung T geht so radial von innen nach außen. Auf welche Weise in der Suspension aus dem Gas G die Gasblasen zur Flotation erzeugt werden, ist nicht konkret gezeigt. Derartige Verfahren sind hinreichend bekannt Der Flotationsbehälter 1 hat hier eine zylindrische Seitenwand 7 und ist mit vier zu dieser Seitenwand 7 konzentrischen Einbauten versehen. Zwischen den senkrechten Einbauten bilden sich ringförmige Kanäle, welche von der Suspension S auf ihrem Weg von innen nach außen in Kanalströmen 4, 4' senkrecht durchströmt werden. (Dabei haben alle Kanalströme bis auf den letzten das Bezugszeichen 4). Das führt hier zuerst zu einer Aufwärtsbewegung der Suspension, dann zu einer Abwärtsbewegung, dann wieder zu einer Aufwärtsbewegung usw. Die Richtungsumkehr ist 180°. Hierdurch wird der Strömungsweg der Suspension wesentlich verlängert, was bei Durchführung der Flotation vorteilhaft ist. Der durch die Erfindung erzielbare Effekt wird durch eine höhere Anzahl von Einbauten verstärkt.

Die Gasblasen werden anfangs von der Suspension auch über die Umlenkungen mitgeschleppt, bilden also keinen Flotationsschaum, wozu die Kanalströme 4 eine entsprechende Mindestgeschwindigkeit haben. Es ist oft zweckmäßig, insbesondere bei höheren Stoffdichten der Suspension, Wirbel oder Turbulenzen zu erzeugen. Dadurch werden Entmischungen verhindert und/oder die Koppelung von Gasblasen und Partikeln gefördert. Das kann in speziellen turbulenzerhöhenden Bereichen erfolgen. Exemplarisch sind hier eine Drosselstelle an einer Umkehrung (turbulenzerhöhender Bereich 9) und Vorsprünge, die in den Kanal hineinreichen (turbulenzerhöhender Bereich 9'), eingezeichnet. Weitere Möglichkeiten sind dem Strömungsfachmann geläufig.

Erfindungsgemäß entsteht der Flotationsschaum 5 erst weiter stromabwärts, und zwar hier in dem Teil des Flotationsbehälters 1, in den die Gasblasen des vorletzten 4 und des letzten Kanalstromes 4' aufsteigen. Der letzte wird als schaumbildender Kanalstrom bezeichnet. In ihm steigen die Gasblasen gegen die abwärts gerichtete Strömung auf und werden darüber als Flotationsschaum im Schaumsammelraum 13 gesammelt. Die Suspension wird nach erfolgter Flotation als gereinigte Flotation S' aus dem Flotationsbehälter 1 abgeführt. Besonders geeignet ist dieses Verfahren zur selektiven Flotation, was bedeutet, daß in der gereinigten Suspension S' ein Großteil der Papierfasem verbleibt. Es ist aber auch denkbar, das Verfahren zur Klärflotation einzusetzen, bei dem möglichst alle Feststoffpartikel in den Flotationsschaum 5 gelangen.

Damit die Suspension von einem Kanal in den anderen strömen kann, sind im Bodenbereich bzw. am Deckel Durchlauföffnungen 3 bzw. 3' frei gelassen. Eine Durchlauföffnung kann sich auch über den ganzen Umfang erstrecken, wenn die entsprechende Trennwand 6, 6' irgendwo anders verankert ist. Der Flotationsfüllstand des letzten Kanalstromes 4' liegt in der Höhe H1 über dem Boden 8 des Flotationsbehälters 1.

Die Trennwände 6, 6' können so dimensioniert sein, daß der rechtwinkelig zu ihnen liegende Querschnitt in den Kanälen konstant bleibt, und damit die Geschwindigkeit der Kanalströme 4. Bei abwärts gerichteten Kanalströmen können wegen der Gegenbewegung der Gasblasen aber auch höhere Geschwindigkeiten von Vorteil sein. Der letzte - schaumbildende - Kanalstrom 4' verläuft hier in einem größeren Querschnitt, um dort die vertikale Geschwindigkeit der Suspension geringer zu halten. Er ist abwärts gerichtet.

Der durch das Verfahren gebildete Flotationsschaum 5 kann, wie hier dargestellt, seitlich abfließen und dann durch einen oder mehrere Rejektausläufe 11 herauslaufen. Oder er füllt den Schaumsammelraum 13 aus und wird dann infolge eines gewissen Überdruckes aus dem Behälter entfernt. Um die Suspensionsfüllhöhe H1 zu regeln, kann zur Erhaltung eines Gegendruckes am Gutstoffauslauf 10 ein einstellbares Ventil 14 angebracht sein. Eine andere Möglichkeit besteht darin, daß an den Gutstoffauslauf 10 ein (hier nicht gezeigtes) Überlaufgefäß mit dem entsprechenden Niveau installiert wird. Durch Einstellung der Suspensionsfüllhöhe läßt sich auch die Menge des abgezogenen Flotationsschaumes regulieren.

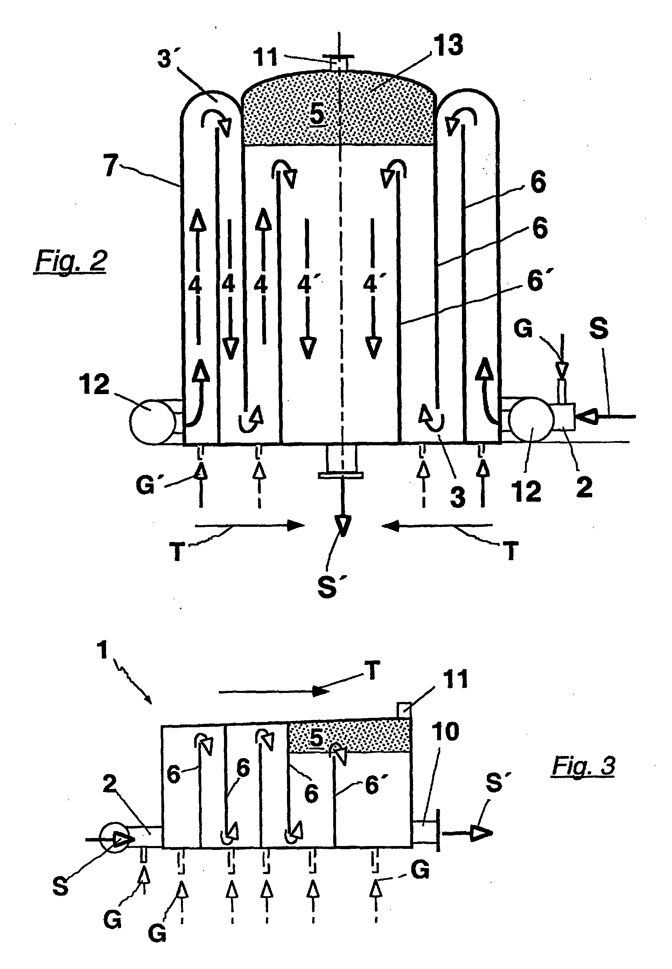

Auch das Verfahren, das in der Fig. 2 dargestellt ist, wird in einem zylindrischen Flotationsbehälter 1 durchgeführt. Zylindrische Behälter sind bezüglich Kompaktheit, Strömungsführung und mechanischer Stabilität besonders günstig. Die Hauptströmungsrichtung T verläuft hier von radial außen nach innen, wozu die Suspension S durch eine Ringleitung 12 an verschiedenen Stellen des Umfangs zugeführt wird. Auch in diesem Flotationsbehälter sind Trennwände 6, 6' eingesetzt, wodurch sich die Kanalströme 4 bzw. 4' ausbilden können. Der Flotationsschaum 5 bildet sich oberhalb des vorletzten und letzten Kanalstromes. Die gereinigte Suspension S' wird unterhalb des letzten Kanalstromes aus dem Flotationsbehälter abgezogen. Die Schaumabsaugung erfolgt nach oben aus einem hier vollständig mit Schaum gefüllten Schaumsammelraum 13. Der Flotationsschaum 5 könnte aber auch über ein Wehr überfließen und z.B. zentral nach unten abfließen.

Bei dem hier gezeigten Beispiel sind die Kanäle, in denen die aufwärts gerichteten Kanalströmungen verlaufen, breiter als die der abwärts gerichteten. Auf diese Weise wird der Tendenz der Blasen, aufzusteigen, entgegengewirkt, d.h. sie werden auch auf dem abwärts gerichteten Teil mitgeschleppt. Wie bereits ausgeführt, kann es sinnvoll sein, zusätzliches Gas G' durch zusätzliche Öffnungen, die hier nur gestrichelt gezeichnet sind, direkt in den Flotationsbehälter einzugeben. Es wäre auch möglich, das gesamte zur Flotation benötigte Gas unterhalb des ersten - aufwärts gerichteten - Kanalstromes einzuführen. In einem solchen Fall könnte der erste Kanal mit Vorteil mit turbulenzerzeugenden Trennwänden versehen sein, welche die Bildung der Luftblasen und die Ankoppelung von Partikeln an diese fördern.

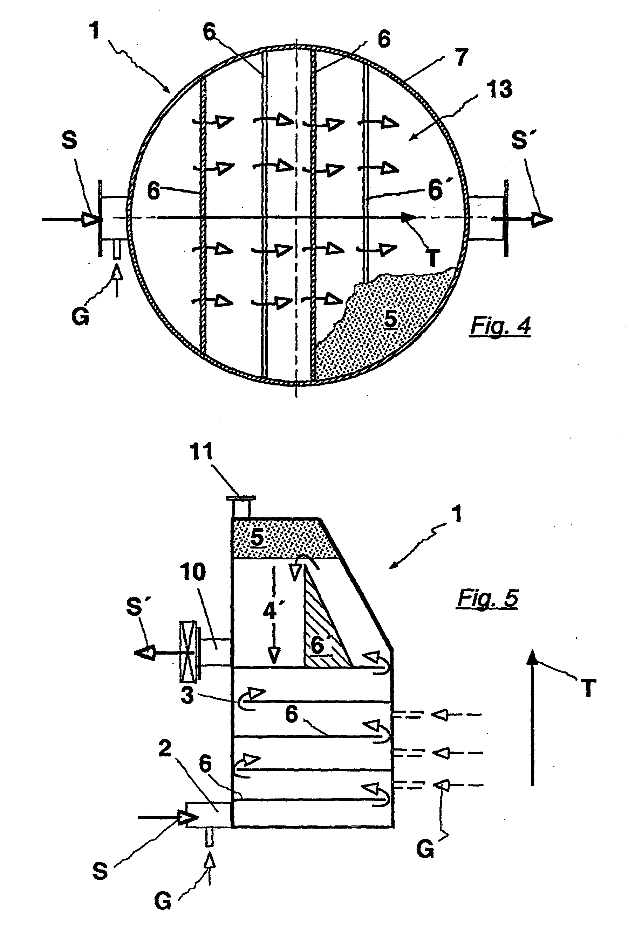

Es sind auch ohne weiteres andere Anordnungen denkbar, z.B. eine Translationsströmung gemäß Fig. 3 durch einen Flotationsbehälter mit rechteckiger Grundfläche. Die Trennwände 6, 6' stehen quer zur Hauptströmungsrichtung T der Suspension und senkrecht. Der Flotationsschaum 5 wird über den letzten beiden Kanalströmen gewonnen.

Auch bei einer Translationsströmung kann der Flotationsbehälter 1 eine ovale oder runde Grundfläche (s, Fig. 4) aufweisen. Eine solche Bauform hat den apparativen Vorteil, daß die statischen Druckkräfte sehr leicht aufgenommen werden können. Man erkennt in Fig. 4 insgesamt vier Trennwände, welche so in den Flotationsbehälter eingepaßt sind, daß die sich dadurch bildenden ersten vier Kanäle im wesentlichen einen gleichen Strömungsquerschnitt aufweisen, während der des fünften Kanals mit dem abwärts gerichteten letzten Kanalstrom deutlich größer ist. Von dem sich im Schaumsammelraum 13 befindenden Flotationsschaum 5 ist nur ein kleiner Anteil gezeichnet.

Wie Fig. 5 zeigt, ist auch eine vertikal aufwärtsgerichtete Hauptströmungsrichtung T denkbar. Der Flotationsbehälter 1 enthält zumindest anfangs eine Anzahl von waagerechten Trennwänden 6, was zu horizontalen Kanalströmen führt. Im oberen Bereich des Flotationsbehälters 1 erfolgt zunächst eine aufwärts, dann eine abwärts gerichtete Kanalströmung. Am Ende der letzten Kanalströmung 4' fällt die gereinigte Suspension S' an, weiche Ober den Gutstoffauslauf 10 abgeführt wird. Oberhalb der letzten Kanalströmung 4' wird der Flotationsschaum 5 gesammelt.

## Patentansprüche

1. Verfahren zur Entfernung von Partikeln aus einer papierfaserhaltigen Suspension (S), bei dem diese durch einen geschlossenen Flotationsbehälter (1) in einer Hauptströmungsrichtung (T) geführt wird, wobei die Suspension (S) auf ihrem Weg durch den Flotationsbehälter (1) zwischen Trennwänden (6, 6') in Kanalströmen (4, 4') geführt wird, deren Richtungen sich mindestens drei Mal umkehren, und wobei die Partikel durch Ankoppelung von Gasblasen zum Aufsteigen gebracht und mit dem so gebildeten Flotationsschaum (5) aus dem Flotationsbehälter (1) entfernt werden, während die verbleibende Suspension (S') als Gutstoff aus dem Flotationsbehälter (1) abgeleitet wird,
**dadurch gekennzeichnet,**
**daß** die Trennung des Flotationsschaumes (5) von der Suspension (S) frühestens nach dem dritten Kanalstrom (4) vorgenommen wird.

2. Verfahren nach Anspruch 1,
**dadurch gekennzeichnet,**
**daß** die Trennung des Flotationsschaumes (5) von der Suspension (S) frühestens bei dem oder nach dem in Strömungsrichtung letzten Kanalstrom (4') vorgenommen wird.

3. Verfahren nach Anspruch 1 oder 2,
**dadurch gekennzeichnet,**
**daß** die Verweilzeit der Suspension in den Kanalströmen (4, 4') zusammen genommen mindestens 20 sec beträgt.

4. Verfahren nach Anspruch 1, 2 oder 3,
**dadurch gekennzeichnet,**
**daß** die Richtung der Kanalströme (4, 4 ') im wesentlichen senkrecht ist, so daß nacheinander Aufwärtsströmungen und Abwärtsströmungen erzeugt werden.

5. Verfahren nach einem der voranstehenden Ansprüche,
**dadurch gekennzeichnet,**
**daß** die Strömungsgeschwindigkeit der Kanalströme (4), mit Ausnahme des letzten Kanalstroms (4'), auf mindestens 10 cm/s eingestellt wird.

6. Verfahren nach einem der voranstehenden Ansprüche,
**dadurch gekennzeichnet,**
**daß** beim letzten Kanalstrom (4') eine vertikal abwärts gerichtete Strömungsgeschwindigkeit zwischen 1 und 4 cm/s eingestellt wird.

7. Verfahren nach einem der voranstehenden Ansprüche,
**dadurch gekennzeichnet,**
**daß** die Suspension (S) auf ihrem Weg durch den Flotationsbehälter (1) durch turbulenzerhöhende Bereiche (9, 9') geführt wird.

8. Verfahren nach Anspruch 7,
**dadurch gekennzeichnet,**
**daß** die turbulenzerhöhenden Bereiche (9) dort liegen, wo die Richtungen umgekehrt werden.

9. Verfahren nach Anspruch 7 oder 8,
**dadurch gekennzeichnet,**
**daß** die turbulenzerhöhenden Bereiche (9) durch Drosselstellen gebildet werden.

10. Verfahren nach Anspruch 7,
**dadurch gekennzeichnet,**
**daß** in den turbulenzerhöhenden Bereichen (9') Vorsprünge angebracht sind, weiche die Strömung partiell ablenken.

11. Verfahren nach einem der voranstehenden Ansprüche,
**dadurch gekennzeichnet,**
**daß** zumindest ein Teil des zur Bildung der Gasblasen benutzten Gases (G) bei der Umkehrung der Richtungen zur bereits im Flotationsbehälter (1) befindlichen Suspension zugemischt wird.

12. Verfahren nach Anspruch 11,
**dadurch gekennzeichnet,**
**daß** das Gas (G) so zugemischt wird, daß die gebildeten Gasblasen eine signifikant andere Größe haben als die bereits im Flotationsbehälter (1) befindlichen Gasblasen, vorzugsweise daß sie größer sind.

13. Verfahren nach einem der voranstehenden Ansprüche,
**dadurch gekennzeichnet,**
**daß** die Suspension (S) im Flotationsbehälter (1) mit einer Strömungsgeschwindigkeit in Umfangsrichtung von mindestens 1 cm/s umgetrieben wird.

14. Flotationsvorrichtung zur Durchführung des Verfahrens nach einem der voranstehenden Ansprüche mit mindestens einem Einlauf (2) für die Suspension (S), mindestens einem Gutstoffauslauf (10) für die gereinigte papierfaserhaltige Suspension (S'), mindestens einem Rejektauslauf (11) für den Störstoffpartikel enthaltenden Flotationsschaum (5) und mit einem Flotationsbehälter (1),
in dem sich mindestens drei Trennwände (6, 6') befinden, welche so angeordnet sind, daß zwischen ihnen zur Führung von Kanalströmen, deren Richtungen sich mindestens drei Mal umkehren, Kanäle entstehen, welche den Einlauf (2) mit dem Gutstoffauslauf (10) hydraulisch verbinden,
**dadurch gekennzeichnet,**
**daß** der Rejektablauf (11) mit einem oben liegenden Schaumsammelraum (13) verbunden ist, der nicht mit allen Kanälen in direkter Verbindung steht, sondern nur mit einem oder zwei der unmittelbar vor dem Rejektablauf (11) liegenden Kanäle.

15. Flotationsvorrichtung nach Anspruch 14,
**dadurch gekennzeichnet,**
**daß** ein Teil der Trennwände (6, 6') mit dem Boden (8') des Flotationsbehälters (1) dicht verbunden ist und mit dem Deckel des Flotationsbehälters (1) unter Freilassung von Durchlauföffnungen (3') und der andere Teil unter Freilassung von Durchlauföffnungen (3) mit dem Boden (8'), wobei sich jeweils die abgedichteten und die mit Durchlauföffnungen (3, 3') versehenen Trennwände (6, 6') in Hauptströmungsrichtung (T) abwechseln.

16. Flotationsvorrichtung nach Anspruch 14 oder 15,
**dadurch gekennzeichnet,**
**daß** der Flotationsbehälter (1) eine runde oder ovale Grundfläche hat und eine in sich geschlossene im wesentlichen senkrechte Seitenwand (7).

17. Flotationsvorrichtung nach Anspruch 16,
**dadurch gekennzeichnet,**
**daß** die Seitenwand (7) des Flotationsbehälters (1) kreiszylindrisch ist und daß die Flotationsvorrichtung für einen Betrieb mit stehendem Zylinder vorgesehen ist.

18. Flotationsvorrichtung nach Anspruch 17,
**dadurch gekennzeichnet,**
**daß** die Seitenwand (7) und die Trennwände (6, 6') konzentrisch sind.

19. Flotationsvorrichtung nach einem der Ansprüche 14 bis 18,
**dadurch gekennzeichnet,**
**daß** der Einlauf (2) im zentralen Bereich des Flotationsbehälters (1) liegt und der Gutstoffauslauf (10) im radial äußeren.

20. Flotationsvorrichtung nach einem der Ansprüche 14 bis 17,
**dadurch gekennzeichnet,**
**daß** Einlauf (2) und Gutstoffauslauf (10) am Flotationsbehälter (1) gegenüberliegend angebracht sind.

21. Flotationsvorrichtung nach einem der Ansprüche 14 bis 20,
**dadurch gekennzeichnet,**
**daß** die Höhe der Trennwände (6, 6') Ober dem Boden (8) mindestens ebenso hoch ist wie die maximal horizontale Erstreckung des Flotationsbehälters (1).

22. Flotationsvorrichtung nach Anspruch 21,
**dadurch gekennzeichnet,**
**daß** die Höhe der Trennwände (6, 6') über dem Boden (8) mindestens zwei Mal so hoch ist wie die maximal horizontale Erstreckung des Flotationsbehälters (1).

23. Flotationsvorrichtung nach Anspruch 14 bis 22,
**dadurch gekennzeichnet,**
**daß** sich im Boden (8) des Flotationsbehälters (1) Anschlüsse befinden, durch die Flotationsluft oder mit Flotationsluft vermischte Flüssigkeit zugegeben werden kann.

## Claims

1. A method for the removal of particles from a suspension (S) containing paper fibres, in which said suspension is guided through a closed flotation vessel (1) in a main direction of flow (T), the suspension (S) on its path through the flotation vessel (1) being guided between partitions (6, 6') in channel streams (4, 4'), the directions of which reverse at least three times, and the particles being caused to ascend by attaching gas bubbles and being removed from the flotation container (1) with the flotation froth (5) thus formed, while the remaining suspension (S') is discharged from the flotation container (1) as accepted stock, **characterised in that** the separation of the flotation froth (5) from the suspension (S) is effected at the earliest after the third channel stream (4).

2. A method according to Claim 1, **characterised in that** the separation of the flotation froth (5) from the suspension (S) is effected at the earliest during or after the last channel stream (4') in the direction of flow.

3. A method according to Claim 1 or 2, **characterised in that** the dwell time of the suspension in the channel streams (4, 4'), taken together, is at least 20 sec.

4. A method according to Claim 1, 2 or 3, **characterised in that** the direction of the channel streams (4, 4') is substantially vertical, so that upward flows and downward flows are produced in succession.

5. A method according to one of the preceding claims, **characterised in that** the flow rate of the channel streams (4), with the exception of the last channel stream (4'), is set to at least 10 cm/s.

6. A method according to one of the preceding claims, **characterised in that** a flow rate directed vertically downwards of between 1 and 4 cm/s is set for the final channel stream (4').

7. A method according to one of the preceding claims, **characterised in that** the suspension (S) on its path through the flotation vessel (1) is guided through turbulence-increasing regions (9, 9').

8. A method according to Claim 7, **characterised in that** the turbulence-increasing regions (9) are located at the points at which the directions are reversed.

9. A method according to Claim 7 or 8, **characterised in that** the turbulence-increasing regions (9) are formed by constrictions.

10. A method according to Claim 7, **characterised in that** projections are provided in the turbulence-increasing regions (9') which partially deflect the flow.

11. A method according to one of the preceding claims, **characterised in that** at least part of the gas (G) used to form the gas bubbles upon the reversal of the directions is admixed to the suspension already located in the flotation vessel (1).

12. A method according to Claim 11, **characterised in that** the gas (G) is admixed such that the gas bubbles formed are of a significantly different size from the gas bubbles already located in the flotation vessel (1), preferably are larger.

13. A method according to one of the preceding claims, **characterised in that** the suspension (S) in the flotation vessel (1) is circulated at a flow rate in the peripheral direction of at least 1 cm/s.

14. A flotation apparatus for performing the method according to one of the preceding claims, comprising at least one inlet (2) for the suspension (S), at least one accepted-stock outlet (10) for the cleaned suspension (S') containing paper fibres, at least one reject outlet (11) for the flotation froth (5) containing impurity particles and a flotation vessel (1), in which there are at least two partitions (6, 6') which are arranged such that channels are produced between them for guiding channel streams, the directions of which reverse at least three times, which channels hydraulically connect the inlet (2) to the accepted-stock outlet (10). **characterised in that** the reject outlet (11) is connected to a froth collection space (13) located at the top which does not communicate directly with all the channels, but only with one or two of the channels located immediately before the reject outlet (11).

15. A flotation apparatus according to Claim 14, **characterised in that** one portion of the partitions (6, 6') is tightly connected to the base (8') of the flotation vessel (1) and to the roof of the flotation vessel (1), leaving free passage openings (3'), and the other portion is connected to the base (8'), leaving free passage openings (3), in each case the sealed partitions (6, 6') and the partitions (6, 6') provided with passage openings (3, 3') alternating in the main direction of flow (T).

16. A flotation apparatus according to Claim 14 or 15, **characterised in that** the flotation vessel (1) has a round or oval base surface and a closed, substantially vertical side wall (7).

17. A flotation apparatus according to Claim 16, **characterised in that** the side wall (7) of the flotation vessel (1) is in the form of a circular cylinder and that the flotation apparatus is provided for operation with a vertical cylinder.

18. A flotation apparatus according to Claim 17, **characterised in that** the side wall (7) and the partitions (6, 6') are concentric.

19. A flotation apparatus according to one of Claims 14 to 18, **characterised in that** the inlet (2) is located in the central region of the flotation vessel (1) and the accepted-stock outlet (10) in the radially outer region.

20. A flotation apparatus according to one of Claims 14 to 17, **characterised in that** the inlet (2) and the accepted-stock outlet (10) are attached opposite one another on the flotation vessel (1).

21. A flotation apparatus according to one of Claims 14 to 20, **characterised in that** the height of the partitions (6, 6') above the base (8) is at least as great as the maximum horizontal extent of the flotation vessel (1).

22. A flotation apparatus according to Claim 21, **characterised in that** the height of the partitions (6, 6') above the base (8) is at least twice as great as the maximum horizontal extent of the flotation vessel (1).

23. A flotation apparatus according to Claims 14 to 22, **characterised in that** connections are located in the base (8) of the flotation vessel (1) by means of which flotation air or liquid mixed with flotation air can be added.

## Revendications

1. Procédé destiné à l'élimination de particules d'une suspension (S) contenant des fibres de papier, dans lequel celle-ci traverse une cuve de flottation (1) fermé dans une direction principale de courant (T), la suspension (S) étant guidée sur son trajet à travers le réservoir de flottation (1) entre des parois de séparation (6, 6') en courants (4, 4') de canaux, dont les sens s'inversent au moins trois fois, et les particules étant amenées à remonter par un couplage à des bulles de gaz, et étant évacuées du réservoir de flottation (1) avec la mousse de flottation (5) ainsi engendrée, alors que la suspension (S') restante est évacuée du réservoir de flottation (1) en tant que pâte à papier finie,
**caractérisé en ce que**
la séparation de l'écume de flottation (5) de la suspension (S) est effectuée au plus tôt après le troisième courant (4) de canal.

2. Procédé selon la revendication 1,
**caractérisé en ce que**
la séparation de l'écume de flottation (5) de la suspension (S) est effectuée au plus tôt au niveau du ou après le dernier courant (4') de canal dans la direction du courant.

3. Procédé selon la revendication 1 ou 2,
**caractérisé en ce que**
le temps de séjour cumulé de la suspension dans les courants (4, 4') de canaux est d'au moins 20 s.

4. Procédé selon la revendication 1, 2 ou 3,
**caractérisé en ce que**
la direction des courants (4, 4') de canaux est sensiblement verticale, de façon à engendrer successivement des courants ascendants et des courants descendants.

5. Procédé selon l'une quelconque des revendications précédentes,
**caractérisé en ce que,**
exception faite du dernier courant (4') de canal, la vitesse d'écoulement des courants (4) de canaux est réglée à au moins 10 cm/s.

6. Procédé selon l'une quelconque des revendications précédentes,
**caractérisé en ce que**
une vitesse d'écoulement orientée verticalement vers le bas comprise entre 1 et 4 cm/s est réglée pour le dernier courant (4') de canal.

7. Procédé selon l'une quelconque des revendications précédentes,
**caractérisé en ce que,**
sur son trajet à travers la cuve de flottation (1), la suspension (S) traverse des zones (9, 9') augmentant les turbulences.

8. Procédé selon la revendication 7,
**caractérisé en ce que**
les zones (9) augmentant les turbulences sont situées au niveau des inversions de sens.

9. Procédé selon la revendication 7 ou 8,
**caractérisé en ce que**
les zones (9) augmentant les turbulences sont constituées de points d'étranglement.

10. Procédé selon la revendication 7,
**caractérisé en ce que**
des saillies, qui dévient partiellement le courant, sont prévues dans les zones (9') augmentant les turbulences.

11. Procédé selon l'une quelconque des revendications précédentes,
**caractérisé en ce que**
une partie au moins du gaz (G) utilisé pour la génération de bulles de gaz est ajoutée à la suspension se trouvant déjà dans la cuve de flottation (1) lors de l'inversion des sens.

12. Procédé selon la revendication 11,
**caractérisé en ce que**
le gaz (G) est ajouté de telle sorte que les bulles de gaz générées aient une taille qui est de façon significative autre que celle des bulles de gaz se trouvant déjà dans le réservoir de flottation (1), de préférence qu'elles soient plus grandes.

13. Procédé selon l'une quelconque des revendications précédentes,
**caractérisé en ce que**
la suspension (S) circule dans le réservoir de flottation (1) à une vitesse d'écoulement d'au moins 1 cm/s dans la direction périphérique.

14. Dispositif de flottation destiné à la mise en oeuvre du procédé selon l'une quelconque des revendications précédentes, comportant au moins une entrée (2) pour la suspension (S), au moins une sortie (10) de pâte à papier finie pour la suspension épurée (S') contenant des fibres de papier, au moins une sortie de rejet (11) pour l'écume de flottation (5) contenant des particules d'impuretés, et un réservoir de flottation (1) dans lequel se trouvent au moins trois parois de séparation (6, 6'), qui sont disposées de telle sorte que des canaux soient formés entre elles pour le guidage de courants de canaux, dont les sens s'inversent au moins trois fois, lesquels canaux relient du point vue hydraulique l'entrée (2) à la sortie (10) de pâte à papier finie,
**caractérisé en ce que**
la sortie de rejet (11) est reliée à un espace collecteur (13) de mousse situé en partie supérieure, qui n'est pas en liaison directe avec tous les canaux, mais uniquement avec un ou deux canaux situés directement en amont de la sortie de rejet (11).

15. Dispositif de flottation selon la revendication 14,
**caractérisé en ce que**
une partie des parois de séparation (6, 6') est reliée de façon étanche au fond (8') du réservoir de flottation (1) et au couvercle du réservoir de flottation (1) en laissant libre des orifices de passage (3'), et **en ce que** l'autre partie est reliée au fond (8') en laissant libre des orifices de passage (3), les parois de séparation (6, 6') étanches et celles munies d'orifices de passage (3, 3') s'alternant dans la direction principale de courant (T).

16. Dispositif de flottation selon la revendication 14 ou 15.
**caractérisé en ce que**
le réservoir de flottation (1) comporte une surface de base circulaire ou ovale, et une paroi latérale (7) fermée sensiblement verticale.

17. Dispositif de flottation selon la revendication 16,
**caractérisé en ce que**
la paroi latérale (7) du réservoir de flottation (1) est cylindrique circulaire, et **en ce que** le dispositif de flottation est prévu pour un fonctionnement en position verticale du cylindre.

18. Dispositif de flottation selon la revendication 17,
**caractérisé en ce que**
la paroi latérale (7) et les parois de séparation (6, 6') sont concentriques.

19. Dispositif de flottation selon l'une quelconque des revendications 14 à 18,
**caractérisé en ce que**
l'entrée (2) est située dans la zone centrale du réservoir de flottation (1), et la sortie (10) de pâte à papier finie dans la zone située radialement à l'extérieur.

20. Dispositif de flottation selon l'une quelconque des revendications 14 à 17,
**caractérisé en ce que**
l'entrée (2) et la sortie (10) de pâte à papier finie sont prévues l'une en face de l'autre sur le réservoir de flottation (1).

21. Dispositif de flottation selon l'une quelconque des revendications 14 à 20,
**caractérisé en ce que**
la hauteur des parois de séparation (6, 6') au-dessus du fond (8) est au moins aussi haute que l'extension horizontale maximale du réservoir de flottation (1).

22. Dispositif de flottation selon la revendication 21,
**caractérisé en ce que**
la hauteur des parois de séparation (6, 6') au-dessus du fond (8) est au moins deux fois plus haute que l'extension horizontale maximale du réservoir de flottation (1).

23. Dispositif de flottation selon l'une quelconque des revendications 14 à 22,
**caractérisé en ce que**
des raccordements sont prévus dans le fond (8) du réservoir de flottation (1), par lesquels peut être ajouté l'air de flottation ou du liquide de flottation mélangé à de l'air de flottation.
